# EUROPÄISCHE PATENTSCHRIFT

(11) **EP 3 092 080 B1**
(45) Veröffentlichungstag und Bekanntmachung des Hinweises auf die Patenterteilung: **02.08.2023**
(21) Anmeldenummer: 15708710.7
(22) Anmeldetag: 08.01.2015
(51) Int. Cl.: B05C 5/02, B05C 11/10, F16K 31/08

(54) **VENTIL MIT VARIABLER STRÖMUNGSÖFFNUNG**
VALVE COMPRISING A VARIABLE FLOW OPENING
SOUPAPE À OUVERTURE D'ÉCOULEMENT VARIABLE

(30) Priorität: 09.01.2014 DE 102014000071
(43) Veröffentlichungstag der Anmeldung: 16.11.2016
(73) Patentinhaber: Beyer, Hans-Jörgen, 72108 Rottenburg (DE)
(72) Erfinder: Beyer, Hans-Jörgen, 72108 Rottenburg (DE)
(86) Internationale Anmeldenummer: PCT/DE2015/100013
(87) Internationale Veröffentlichungsnummer: WO 2015/104018

(56) Entgegenhaltungen:
- DE-A1- 19 623 104
- DE-A1-102007 029 064
- DE-A1-102010 034 761
- DE-U1- 20 202 381
- JP-A- 2005 164 025
- US-B1- 6 199 587

## Beschreibung

Die vorliegende Erfindung betrifft ein Verfahren zum Dosieren von Fluiden gemäß Anspruch 1. Weiter betrifft die Erfindung eine Dosiervorrichtung zum Dosieren von Fluiden gemäß Anspruch 3. Nicht zuletzt betrifft die Erfindung eine Verwendung einer Dosiervorrichtung nach Anspruch 5.

Insbesondere betrifftdie Erfindung ein Ventil für den Durchfluss von Medien, Fluide als auch Gase, wobei für eine stufenlose und variable Strömungsöffnung für einen variablen Durchfluss von Medien ein frei beweglicher Körper in einem Durchflussraum über außerhalb des Durchflussraums variierbare und beabstandete Magnete gegen eine Strömungsrichtung ausgelenkt wird und damit einen variabel dosierbaren Medienübertrag als Linie oder Punkt ohne Nachtropfen auf ein Substrat ermöglicht.

Ferner betrifft die Erfindung die Mikroregulierung des Durchflusses von Medien durch das Ventil und die Integration in Dosiersysteme und Stifte.

### Stand der Technik.

Bekannte magnetische Ventile mit beweglichen Körpern zum Öffnen oder Schließen eines Ventils basieren entweder auf elektrischer Magnetfelderregung, auf erzeugten Druckdifferenzen in Strömungsrichtung, funktionieren mit Federn oder mit Haltekrften von magnetisierbaren oder magnetisierten mehreren Elementen innerhalb eines mediendurchflossenen Ventilkörpers, z.B. als Abschnitt eines Hohlkanals, wobei z.B. ein Element, über eine Druckbeaufschlagung von Medien in Strömungsrichtung beweglich ist. Derartige Ventile sind aus DE 199 22 414 C1 und EP 2 283 264 B1 bekannt, ebenso wie der zugehörige Stand der Technik.

Ventile die auf elektrischer Magnetfelderregung beruhen sind technisch und energiemäßig aufwändig. Entsprechend einem zeitlichen Verlauf von magnetischen Feldstärken ändert sich die magnetische Flussdichte. Frequenzen und Schaltzyklen beeinflussen das Fließverhalten von Medien über Erwärmung von Ventilen und durchfließender Medien, mit Viskositätsänderungen. Nuten und Verbindungselemente in Ventilkörpern sind Störfaktoren mit potentieller Undichtigkeit, die sich auf das Strömungsverhalten eines Mediums auswirken. Eingebaute Federn sind Widerstände die zu überwinden sind und die Strömung eines Mediums ändern. Ventile mit Metalloberflächen im Durchflussraum sind für aggressive Medien, wie auch z.B. für Cyanacrylate wenig geeignet, da sie das Ventil gefährden.

Ventile die über Druckaufbau und Druckabbau ein Ventil öffnen oder schließen oder zuvor eine Druckerhöhung über das Mediums erfordern, ändern das Fließverhalten eines Mediums ständig auf Grund diskontinuierlicher Druckzustände im System.

So offenbart zum Beispiel die DE 10 2007 029 064 A1 ein Ventil für die Beleimung von Zuschnitten oder Packungen in der Verpackungstechnik, das ein mit hoher Taktzahl betätigtes Verschlussorgan aufweist. Dieses ist durch ein Öffnungsmittel, insbesondere durch einen Elektromagneten, in Öffnungsstellung bewegbar und durch ein besonderes Schließmittel ständig in Schließstellung beaufschlagt. Als Schließmittel werden Dauermagneten verwendet, nämlich Einzelmagnete, die mit gleichgerichteten Magnetpolen einander zugekehrt sind, sodass die Schließbewegung des Verschlussorgans durch Abstoßen des betreffenden Einzelmagneten von dem zugeordneten Einzelmagnet im Gehäuse erfolgt.

Ähnlich betrifft auch die DE 10 2010 034 761 A1 ein Leimventil und ein Verfahren zur Steuerung desselben mit einem steuerbar betätigbaren Verschlussorgan, mit dem das Ventil zwischen einer Öffnungsstellung und einer Schließstellung hin- und her schaltbar ist, und mit einer Wärmequelle, mit der durch das Leimventil führbarer Leim, insbesondere Heißleim, erwärmbar ist. Das Ventil weist mindestens zwei unabhängig voneinander mit elektrischem Strom beaufschlagbare, entlang einer gemeinsamen Achse angeordnete Elektromagneten mit jeweils mindestens einer Spule auf mit denen das Verschlussorgan betätigbar ist und mit denen der durch das Ventil führbare Leim erwärmbar ist, wobei die beiden Elektromagneten derart positioniert und ausgebildet sind, dass sich die magnetischen Wirkungen der Spulen der beiden Elektromagneten abhängig von deren Beaufschlagung mit Strom entlang der gemeinsamen Achse entweder verstärken oder mindestens teilweise, vorzugsweise vollständig aufheben.

Aus der DE 202 02 381 U1 ist eine Ventile umfassend Magnetspule mit Magnetkern und Dosierkolben mit Dichtsitz für Vorrichtungen zum Auftrag von fließfähigen oder fließfähig gemachten Stoffen bekannt, wobei der Dosierkolben mindestens teilweise mit einer Ummantelung aus einem feuchtigkeitsabweisenden Material versehen ist. Die Ummantelung ist derart ausgestaltet, dass der Dosierkolben vom Druckraum getrennt ist. Die Materialoberfläche gegen die eingesetzten fließfähigen oder fließfähig gemachten Stoffe ist inert. Die Materialoberfläche der Ummantelung ist klebstoffabweisend. Die Ummantelung ist druckstabil ausgestaltet. Die Ummantelung ist für Drücke zwischen 0 - 20 bar, vorzugsweise 0,1 bis 5 bar ausgelegt. Die Ummantelung weist die Form eines Faltenbalgs auf. Die Zahl der Falten des Faltenbalgs beträgt 2 - 10 .

Aus der JP 2005 164 025 A ist ein Fluidsteuerventil zum Ermöglichen einer strikten Verwaltung der Fluidsteuerung mit einem kompakten Ventilhauptkörper bekannt, das keinen großen Leitungsraum erfordert und einen geringen Leitungswiderstand hat. Ein Ventilelement , das beweglich in einer geraden Rohrleitung enthalten ist, die in einem Körper ausgebildet ist, ist mit einem magnetischen Material oder einem Magneten so aufgebaut, dass es von der Außenseite des Körpers durch die magnetische Kraft des Magnet, der an einem Kolben vorgesehen ist, bewergbar ist. Der Magnet ist so positioniert, dass ein Abstand von einer Mittelposition des Magneten zu der Mittelposition des Ventilelements eine vorgesehene Beziehung erfüllt.

Aus der DE 196 23 104 A1 ist eine als Einhebelmischer ausgebildete Sanitärarmatur mit einem Gehäuseteil und einem den Auslaufkanal enthaltenden Auslaufteil bekannt, wobei sich in dem Gehäuseteil eine Mischbatterie zur Mischung von kalter und warmer Flüssigkeit sowie zur Regulierung der Flüssigkeitsmenge befindet und wobei die Mischbatterie über eine mit einem Betätigungshebel verbundene Steuerstange von einer geschlossenen in eine geöffnete Stellung betätigbar ist, wobei diese folgende Merkmale aufweist: a) der Mischbatterie ist ein elektrisch steuerbares Ventil nachgeschaltet, so dass die aus der Mischbatterie austretende Flüssigkeit vor Eintritt in den Auslaufkanal zunächst durch dieses Ventil geführt wird; b) das elektrisch steuerbare Ventil ist über eine Steuerelektronik mit einem Annäherungssensor verbunden; c) das elektrisch steuerbare Ventil ist in Abhängigkeit von der jeweiligen Lage des Betätigungshebels auch mechanisch mittels einer zwischen Steuerstange und Ventil angeordneten Hebelverbindung steuerbar, derart d) dass in der geschlossenen Endstellung der Mischbatterie - bzw. innerhalb eines ersten sich an diese Endstellung anschließenden Schwenkbereiches des Betätigungshebels -, unabhängig von an dem elektrisch steuerbaren Ventil liegenden elektrischen Steuersignalen, das Ventil geschlossen bleibt; e) dass, ebenfalls unabhängig von an dem Ventil liegenden elektrischen Steuersignalen, das Ventil geöffnet bleibt, sofern sich die Mischbatterie in ihrer geöffneten Endstellung - bzw. der Betätigungshebel innerhalb eines dritten Schwenkbereiches - befindet und f) dass innerhalb eines zwischen dem ersten und dem dritten Bereich liegenden zweiten Schwenkbereich des Betätigungshebels das elektrisch steuerbare Ventil bei Aktivierung durch den Annäherungssensor geöffnet werden kann und ansonsten geschlossen bleibt.

Aus der US 6 199 587 B1 ist ein Magnetventil mit einer ersten Spule, einem Kolben, mindestens einer ersten und einer zweiten Öffnung in dem Ventil und einem Verriegelungsmechanismus, der in Verbindung mit der ersten Öffnung angeordnet ist, bekannt, wobei der Verriegelungsmechanismus ein Verriegeln des Kolbens mit einer vorbestimmten Verriegelungskraft an der ersten Öffnung bewirkt und ein eine erste Spule entlang einer vorbestimmten ersten Polarität zumindest eine Reduzierung der Rastkraft, bewirkt, wobei der Kolben ein erstes Ende in Richtung der ersten Öffnung und ein zweites Ende in Richtung der zweiten Öffnung hat, wobei die erste Spule von dem ersten Ende entfernt ist und ein Magnetfeld-Extensor vorgesehen ist, der sich von einem ersten Pol des von der ersten Spule erzeugten Magnetfelds bis zum ersten Ende des Kolbens erstreckt, wobei der Magnetfeld-Extensor ein Eisenmaterialelement umfasst, das durch ein Eisenendstück abgeschlossen ist und in Bezug auf die erste Öffnung beweglich ist.

Ein qualitativer und reproduzierbarer Medienaustritt ist jedoch nur unter gleichen Druckzuständen von Medium und Druckbeaufschlagung, sowie gleichem Strö-mungsverhalten des Mediums zu erreichen.

Ventile beeinflussen mit ihrem Aufbau und durch Bereiche, in denen sich Luftblasen ausbilden oder ablagern können, das Strömungsverhalten eines Mediums nach dem Ventil.

### Darstellung der Erfindung.

Aufgabe der Erfindung ist, ein Ventil zu schaffen, welches ein Medium nahezu ungestört durchströmen kann, medienverträglich ist, daher auch für Medien wie Cyanacrylat oder auch für aggressive Medien geeignet ist und wobei es möglich ist beliebig lange Linien mit vorgegebener Ausbildung eines Anfangs und Endes einer Linie, sowie Punkte, fehlerfrei in gewünschter Art auf ein Substrat in beliebigen, auch langen Zeitabständen in wiederholbarer Qualität zu übertragen und wobei ein Nachtropfen nach einem Dosiervorgang ausgeschlossen werden kann. Darüber hinaus soll ein Medium innerhalb des Ventils nicht derart reagieren können, dass die Gefahr besteht, dass dieses dadurch unbrauchbar wird. Daneben soll erreicht werden, dass das Ventil auch ohne spezifische Kenntnisse eines Dosiersystems den Einsatz des Ventils in einem Dosiersystem mit einfacher Handhabung ermöglicht, bzw. ein automatisierter variabler Übertrag eines Medium vereinfacht wird. Insbesondere ist es eine Aufgabe der Erfindung ein Verfahren und eine Vorrichtung zum tropffreien Dosieren von Fluiden sowie eine Verwendung hierzu bereitzustellen.

Diese Anforderungen werden erfindungsgemäß über die Patentansprüche gelöst.

Insbesondere werden die Aufgaben mittels eines Verfahrens nach Anspruch 1, einer Vorrichtung nach Anspruch 3 und einer Verwendung nach Anspruch 5 gelöst.

Der Gegenstand der vorliegenden Erfindung betrifft ein Verfahren zum Dosieren von Fluiden, insbesondere von flüssigen Fluiden, bei dem aus mindestens einem Fluidreservoir mindestens ein Fluid in eine Ausflussrichtung durch eine verschließbare Ventileinrichtung geleitet wird, wobei mindestens eine Ventilöffnung der Ventileinrichtung mittels eines Ventilschließkörpers verschlossen bzw. geöffnet wird, um das Fluid durch die Ventilöffnung zu leiten bzw. ein Leiten zu blockieren, wobei das Öffnen bzw. Schließen magnetisch durch Bewegen des Ventilschließkörpers durchgeführt wird und der Ventilschließkörper in dem Fluidreservoir auf einer stromaufwärts gelegenen Seite der Ventilöffnung angeordnet und bewegt wird, wobei der Ventilschließkörper ein frei beweglicher Körper aus ferromagnetischem Material ist, wobei für eine stufenlose und variable Strömungsöffnung für einen variablen Durchfluss vom Fluid der Ventilschließkörper in dem Fluidreservoir über außerhalb des Fluidreservoirs variierbare und beabstandete Magnete gegen eine Strömungsrichtung ausgelenkt wird, wobei das Fluidreservoir ein Hohlkörper ist, wobei der in Strömungsrichtung über das Fluid in dem Hohlkörper mit Druck beaufschlagte frei bewegliche Ventilschließkörper für seine Lageveränderung, für eine Unterbrechung des Fluidflusses, von mindestens einem ersten Permanentmagneten an eine fluiddichte Kontaktfläche im Hohlkörper in Strömungsrichtung angezogen wird, wobei der Ventilschließkörper für sein Lageänderung, für einen Durchfluss des Fluids durch den Hohlkörper, von einer fluiddichten Kontaktfläche im Hohlkörper, über mindestens einen ortsveränderlichen zweiten Permanentmagneten, der bei geeigneter Entfernung mit einer höheren anziehenden magnetischen Kraft auf den Ventilschließkörper wirkt als der erste Magnet, beabstandet wird, und wobei je nach Entfernung und Position des zweiten Magneten und ersten Magneten zueinander ein variabler Fluidfluss und eine variable Strömungsöffnung erzeugbar ist, wobei sich der erste Permanentmagnet und zweite Permanentmagnet außerhalb des Hohlkörpers befinden.

Eine Ausführungsform sieht vor, dass als Fluid ein Cyanacrylat verwendet wird.

Zudem sieht die technische Lehre der vorliegenden Erfindung vor, dass bei einer Dosiervorrichtung zum Dosieren von Fluiden, insbesondere von flüssigen Fluiden, Mittel zur Durchführung des vorstehend beschriebenen Verfahrens vorhanden sind, insbesondere mit einem Fluidreservoir, das zur Aufnahme der Fluide ausgebildet ist, welches mindestens eine verschließbare Ventileinrichtung in einer Ausflussrichtung aufweist, durch welche das Fluid leitbar ist, wobei die Ventileinrichtung mindestens eine Ventilöffnung aufweist, die mittels mindestens eines Ventilschließkörpers verschließbar bzw. öffenbar ist, um das Fluid durch die Ventilöffnung zu leiten bzw. ein Leiten zu blockieren, wobei weiter mindestens ein magnetischer Aktuator vorgesehen ist, um das Öffnen bzw. Schließen durch Bewegen des Ventilschließkörpers durchzuführen und der mindestens eine Ventilschließkörper auf einer stromaufwärts gelegenen Seite der Ventilöffnung in dem Fluidreservoir angeordnet und bewegbar ist, wobei der Ventilschließkörper ein frei beweglicher Körper aus ferromagnetischem Material ist, wobei für eine stufenlose und variable Strömungsöffnung für einen variablen Durchfluss vom Fluid der Ventilschließkörper in dem Fluidreservoir über außerhalb des Fluidreservoirs variierbare und beabstandete Magnete gegen eine Strömungsrichtung ausgelenkt wird, wobei das Fluidreservoir ein Hohlkörper ist, wobei der in Strömungsrichtung über das Fluid in dem Hohlkörper mit Druck beaufschlagte frei bewegliche Ventilschließkörper für seine Lageveränderung, für eine Unterbrechung des Fluidflusses, von mindestens einem ersten Permanentmagneten an eine fluiddichte Kontaktfläche im Hohlkörper in Strömungsrichtung angezogen wird, wobei der Ventilschließkörper für seine Lageänderung, für einen Durchfluss des Fluids durch den Hohlkörper, von einer fluiddichten Kontaktfläche im Hohlkörper, über mindestens einen ortsveränderlichen zweiten Permanentmagneten, der bei geeigneter Entfernung mit einer höheren anziehenden magnetischen Kraft auf den Ventilschließkörper wirkt, als der erste Magnet, beabstandet wird, und wobei je nach Entfernung und Position des zweiten Magnete und ersten Magneten zueinander ein variabler Fluidfluss und eine variable Strömungsöffnung erzeugbar ist, wobei sich der erste Permanentmagnet und zweite Permanentmagnet außerhalb des Hohlkörpers befinden.

Noch eine andere Ausführungsform sieht vor, dass als Fluid ein Cyanacrylat vorgesehen ist.

Die Ventileinrichtung umfasst einen Ventilsitz. Der Ventilsitz, an welchem der Ventilschließkörper zum Verschließen anliegt, kann eine beliebige Form aufweisen. Der Ventilsitz weist die Ventilöffnung auf, die mittels des Ventilschließkörpers verschließbar ist.

In einer Ausführungsform ist eine trichterförmige Ausführung vorgesehen. In einer andern Ausführungsform ist eine plane Fläche vorgesehen. Insbesondere ist eine nicht-trichterförmige Führung bzw. ein nichttrichterförmiger Ventilsitz vorgesehen.

Anpassungsfähige Materialeigenschaften des Ventilsitzes ermöglichen einen dichten Verschluss über den Ventilschließkörper.

Zudem sieht die technische Lehre der vorliegenden Erfindung eine Verwendung einer vorstehend beschriebenen Dosiervorrichtung zum Dosieren von Fluiden, insbesondere von gasförmigen und/oder flüssigen Fluiden, insbesondere für ein tropffreies Dosieren vor. Die Dosiervorrichtung lässt sich in beliebigen Vorrichtungen vorsehen.

Erfindungsgemäß ist das Ventil vorzugsweise derart aufgebaut, dass vorzugsweise ein axialer und ungestörter, nichtmagnetischer Hohlkörper ein Medium beinhaltet, welches dem Hohlkörper zugeführt ist oder wird und über eine Öffnung bzw. Undichtigkeit des Hohlkörpers weiterströmen kann. Vorteilhafter Weise besteht dieser Hohlkörper aus einem Material, dass auf das Medium und die Funktion des Ventils abgestimmt ist.

Im Hohlkörper befindet sich ein Medium, sowie ein frei beweglicher Körper, vorzugsweise in Form einer Kugel aus ferromagnetischem Material, der auf Grund seiner Größe sowohl dafür geeignet ist die Öffnung des Hohlkörpers dicht zu verschließen, als auch je nach Auslenkung des beweglichen Körpers variabel einen Durchfluss des Mediums zu ermöglichen. Der ferromagnetische Körper kann dabei mit einer medienverträglichen Schutzschicht und Oberfläche, z.B. mit Teflon, ausgerüstet sein, die seine Funktion optimiert.

Die Funktion des Hohlkörpers als Ventil wird dadurch erreicht, dass der frei bewegliche Körper zum einen vorzugsweise über außerhalb des Hohlkörpers, in Strömungsrichtung unterhalb der Ventil-Öffnung des Hohlkörpers angeordnete und auf den Körper wirkende justierbare magnetische Anziehungskräfte, - vorzugsweise permanentmagnetische Anziehungskräfte eines Ringmagneten, dessen innerer Ring einen größeren Querschnitt haben sollte als die Öffnung des Hohlkörpers, so dass dieser eine dem Öffnungsquerschnitt des Hohlkörpers angepasste Verjüngung des Hohlkörpers umschließen kann -, an die Öffnung des Hohlkörpers herangezogen wird, so dass der Körper die Öffnung fluiddicht abschließt, andererseits aber der Körper von der Öffnung beabstandet werden kann, indem auf ihn gleichfalls beweglich angeordnete magnetische Anziehungskräfte, vorzugsweise außerhalb des Hohlkörpers angeordnete permanentmagnetische Anziehungskräfte die entgegen der Strömungsrichtung je nach Distanz und Annäherung des externen Magneten wirken, die größer sein können als die Anziehungskräfte auf den frei beweglichen Körper in Strömungsrichtung sowie einem auf den Körper wirkenden Druck über das Medium in Strömungsrichtung, der gleichfalls den beweglichen Körper gegen die Öffnung treibt.

Auf den beweglichen Körper lastet ein Druck über ein Medium im Hohlkörper der größer ist als der atmosphärische Druck. Das Medium selbst ist für ein konstantes Strömungsverhalten mit einem eingestellten konstanten Druck beaufschlagt und treibt den beweglichen Körper gegen die Öffnung des Hohlkörpers. Über die Erzeugung einer minimalsten Änderung der Lage des beweglichen Körpers zur Öffnung des Hohlkörpers, vergleichbar einer Undichtigkeit des Hohlkörpers und Strömungs- / Ventilöffnung, kann selbst bei geringen Druckunterschieden zwischen dem Druck im Hohlkörper und dem z.B. atmosphärischem Umgebungs-Druck und entsprechend der Viskosität eines Mediums und entsprechend der Lage des beweglichen Körpers im Hohlkörper zur Öffnung und in Abhängigkeit der magnetischen Anziehungskräfte eines externen Ringmagneten unterhalb der Strömungsöffnung und einer Annäherung eines weiteren externen Magneten ein Medium aus dem Hohlkörper für einen Dosiervorgang austreten.

Generell ändern sich mit Austritt eines Mediums aus einem Ventil bzw. einer Dosierpore die Druckverhältnisse im System. Eine reproduzierbarer Austritt des Mediums und eine geforderte Dosierqualität wird mit dem erfindungsgemäßen Ventil dadurch erreicht, indem die auf den ferromagnetischen beweglichen Körper im Hohlkörper wirkenden jeweiligen Anziehungskräfte in und gegen die Strömungs-richtung über die Distanzen von externen Magneten manuell oder maschinell derart geregelt werden, dass über eine resultierende Beabstandung zwischen dem frei beweglichen Körper und der Öffnung des Hohlkörpers variable Strömungsöffnungen erzeugt werden, über die sich der Durchfluss eines Mediums durch das Ventil variabel einstellen lässt.

Vorzugsweise lässt sich eine variable Position der externen Magnete und damit variable Strömungsöffnung, mittels Software programmieren und in Verbindung mit Controllern und Bewegungselementen umsetzen.

Dies hat den großen Vorteil, dass auch ohne Kenntnis der genauen Kräfteverhältnisse und nichtlinearen Abläufe, die Qualität und Art eines Medienauftrags nach Durchfluss des Mediums über die Strömungsöffnung und nach Austritt aus einer Dosierpore und Übertrag auf ein Substrat, damit der Erfolg eines beabsichtigten Medienübertrags, unmittelbar ausgewertet und in Rückkopplung auf die programmierten Werte eine Position der externen Magnete ggf. korrigiert und für einen folgenden Übertrag des Mediums angepasst werden können, sofern es der Dosierauftrag erfordert. Eine Korrektur kann sowohl manuell nach optischer Beur-teilung, als auch über Mess- und Sensortechnik automatisch erfolgen.

Auf diese Weise werden variable Strömungsöffnungen während eines Dosiervorganges für einen angepassten Durchfluss des Mediums für ein optimales Dosierergebnis auf einem Substrat erzeugt. Die jeweiligen Strömungsöffnungen richten sich hierbei nach dem Resultat eines Medienübertrags.

Einmal als richtig erkannte Werte und Einstellungen können gespeichert, für folgende Dosiervorgänge archiviert, nach belieben abgerufen, als auch kombiniert werden. Zusätzlich können weitere Einflüsse wie z.B. Viskosität, Fließeigenschaften des Mediums, Temperatur- , Luftdruck- und Feuchtigkeitsänderungen und weitere Parameter mess- und sensortechnisch erfasst und für eine präzise Mikrodosierung der Software übermittelt und von dieser für eine exakte Positionierung der externen Magnete ausgewertet und verarbeitet werden.

Eine programmierte und positionierbare Veränderung der Lage von Permanentmagneten für veränderlich wirkende Kräfte auf einen in einem im Hohlkörper befindlichen ferromagnetischen Körper wird vorzugsweise über steuerbare Schritt-motoren, Servomotoren und Mikrocontrollern erreicht. Die Magnete werden unter Beachtung der Pole entweder direkt an den Motoren angebracht oder von den Motoren entfernt mit diesen verbunden. Dies kann vorteilhaft sein, wenn örtliche Gegebenheiten dies erfordern, die unmittelbare Größe des Ventils und das Gewicht möglichst gering sein sollen, zusätzlich Übersetzungen für die Auslenkung der Mag-nete vorteilhaft sind, oder die Magnetfelder der Magnete die Motoren beeinflussen.

Gleichzeitig kann darüber ausgeschlossen werden, dass sich der Ventilkörper und das Medium über Motoren erwärmt.

Eine vorteilhafte, schnell reagierende Möglichkeit einen externen Magneten für eine Auslenkung in Richtung des Körpers im Hohlkörper zu positionieren kann erreicht werden, indem ein, zur Verminderung von Reibungswiderständen idealer Weise luftgelagerter, Permanentmagnet mit einem Servomotor in Richtung des beweglichen Körpers entsprechend der Programmierung bewegt wird, die Rückstellung des Magneten in eine neue, vom beweglich im Hohlkörper gelagerten Körper weiter entfernte Position jedoch ohne Kraft des Servomotors über magnetische, vorzugs-weise ebenfalls permanentmagnetische, Anziehungskräfte auf den ortsveränderlichen Permanentmagneten entgegen der Auslenkung über den Servomotor erfolgt. In diesem Fall erfordert die Verbindung zwischen dem zu positionierenden Permanentmagneten und dem Servomotor keine starre Verbindung und der Servomotor kann sich unbelastet schnell und ohne zusätzliche Masse in eine neue vorprogrammierte, vom beweglichen Körper weiter weg entfernte Position bewegen.

Entsprechend einer einstellbaren Distanz zwischen dem Rückstellmagnet und dem ortsveränderlichen Permanentmagneten in einer Ausgangsposition, lassen sich die wirkenden Magnetkräfte zueinander beeinflussen und feinjustieren.

Dabei sind die Anziehungskräfte in Abstimmung einer Feinjustierung der Magnetabstände zwischen dem frei beweglichen Körper im Hohlkörper und den externen Magneten, die den frei beweglichen Körper gegen die Öffnung des Hohlkörpers in Fließrichtung anziehen, zueinander abzugleichen. Erleichtert wird dies, wenn sich zwischen dem Hohlkörper und dem externen Magneten außerhalb und unterhalb der Öffnung des Hohlkörpers eine Feder, z.B. aus Kunststoff angeordnet ist, die den externen Magneten in einer fixen Lage zum Hohlkörper stabilisieren kann, indem z.B. der Hohlkörper gegen die Feder, z.B. über dessen Befestigung, justiert wird.

Eine gezielte Auslenkung des ferromagnetischen Körpers im Hohlkörper lässt sich auch erreichen, wenn sowohl der externe Magnet unterhalb des Hohlkörpers, unterhalb der Strömungsöffnung, als auch der ortsveränderliche Permanentmagnet gleichzeitig und koordiniert bewegt wird. Dies kann bei besonderen Ausführungen des Ventils nützlich sein.

In allen Fällen ist darauf zu achten, dass es zu keinem direkten Kontakt zwischen beweglichen und unbeweglichen, auch handelsüblichen und geeigneten Permanentmagneten, bevorzugt aus hartmagnetischem Material kommen kann. Der Hohlkörper besteht dabei aus vorzugsweise nicht magnetisierbarem Material und bevorzugt aus materialverträglichem Kunststoff. Um einen Kontakt zu verhindern muss gewährleistet sein, dass sich Magnete nicht soweit annähern können, dass es zwangsweise zu einem Kontakt kommt. Auf einfache Weise kann dies über Distanzelemente z.B. aus Kunststoff erreicht werden an denen z.B. auch der Hohl-körper, mit nicht magnetisierbaren Riegeln oder Klipse befestigt sein kann.

Eine Variante des Aufbaus für das Dosieren von Medien bietet sich für Dosierstifte an. Ein z.B. zylinderförmiger Hohlkörper mit einem magnetischen bzw. ferro-magnetischem Körper kann hierbei oberhalb des Bewegungsraums des Körpers und entgegen der Fließrichtung des Mediums auch mit einer für das Medium strömungsgünstigen Sicke ausgeführt sein, in der ein externer Magnet, vorzugsweise innerhalb des Radius des Hohlkörpers, zur Lageveränderung des beweglichen Körpers im Hohlkörper, gelagert und manuell oder über ein folgendes Bewegungselement bewegt und positioniert werden kann, so dass hierüber, wie zuvor beschrieben, in Verbindung eines Magneten unterhalb des Hohlkörpers als Gegenkraft auf den variabel beweglichen Körper im Hohlkörper, entsprechend der jeweiligen Positionierung der Magnete eine variable Strömungsöffnung erzeugt werden kann.

Eine weitere mögliche Variante arbeitet mit einer Hohlachse des Bewegungselements, durch die das Medium unmittelbar, vorzugsweise jedoch über einen als Schlauch weitergeführten Hohlkörpers in der Hohlachse, strömt, wobei der externe Magnet, der auch als Ringmagnet um die Achse angeordnet sein kann, über das Bewegungselement positioniert wird.

Für eine ungestörte Handhabung von Dosierstiften lässt sich ein Bewegungselement in Gestalt eines Motors in einem Dosierstift über Controller mittels Funkverbindung oder integrierte Speichermedien, für variable und reproduzierbare Dosiermengen, steuern und im Stift eine Stromversorgung vorsehen.

Bei einer manuell durchgeführten Positionierung externer Magnete die einen beweglichen Körper im Hohlkörper auslenken können, lassen sich z.B. Anschläge, z.B. für Hebel an die auch alternativ Permanentmagnete direkt angebracht sein können, justieren, so dass in Verbindung einer Zeiteinheit gleiche Dosierergebnisse möglich werden.

Für Dosierstifte lässt sich der Hohlkörper incl. des beweglichen Körpers und Me-diums auch als wechselbare Patrone in einen Dosierstift integrieren, wobei ein Druck auf das Medium mittelbar oder unmittelbar ausgeübt wird, der z.B. gleichfalls über eine wechselbare Druckpatrone im Dosierstift ausgeübt werden kann, bzw. das Me-dium wird über einen im Dosierstift erzeugten manuellen Druckaufbau beaufschlagt.

Vorteilhafter Weise wird jedoch bei Dosierstiften, bei denen das Medium nicht über Leitungen in den Stift nachfließt, das Medium aus einer eingesetzten Einweg-MedienPatrone ohne beweglichen Körper in der Medienpatrone, indirekt über eine Dosierung einer Druckbeaufschlagung gemäß der Erfindung mit dem erfinderischen Ventil, oder mit einem erfindungsgemäßen Ventil, in Strömungsrichtung unterhalb einer wechselbaren Patrone, das zwischen einer Verbindung einer Dosierpore und einer Öffnung einer Patrone angeordnet ist, dosiert.

Für Medien, die in bestimmten Mengenverhältnissen zusammengeführt dosiert werden müssen, wie z.B. im Falle von Reaktionsklebstoffen, ermöglichen mehrere erfindungsgemäße Ventile im Verbund die jeweiligen Medien in Abstimmung zu-einander koordiniert und entsprechend programmiert in unterschiedlichen Verhält-nissen zusammenzuführen und über eine gemeinsame Dosierpore zusammen-gemischt ausströmen zu lassen. Die variabel erzeugten Strömungsöffnungen der erfindungsgemäßen Ventile ermöglichen hierbei Medien derart zueinander zu dosieren, dass bei einem durchlaufenden Medienauftrag über eine gemeinsame Austrittspore ein gemischtes Medium mit unterschiedlichen Eigenschaften austreten kann, das nach einem Übertrag auf ein Substrat unterschiedliche Eigenschaften, wie z.B. weicher oder härter, ausweisen oder annehmen kann. Das hat insbesondere den Vorteil. dass z.B. Dosiermedien entsprechend der Art ihres Verlaufs, z.B. für eine enge Kurvenführung zur Vermeidung von Spannungsrissen anders eingestellt werden können, als im geraden Verlauf. Auf die Möglichkeit hierbei unterschiedlich breite Linien beliebiger Länge zu erzeugen wurde schon hingewiesen.

Ein für das Ventil notwendiger nicht magnetisierbarer und auf Medien abgestimmter störungsfreier und fluid- und luftdichter Hohlkörper mit einem innerhalb liegenden frei beweglichen Körper aus ferromagnetischem Material, vorzugsweise ein kugel-förmiger Permanentmagnet, lässt sich sehr einfach herstellen. Es genügt den Hohlkörper strömungsgünstig nach bekannten Verfahren als unverschlossene, vorzugsweise als symmetrische, sich zu den Enden hin verjüngende Ampulle aus Kunststoff, herzustellen, in die während der Produktion eine, z.B. magnetische Kugel, eingebracht wird, die gleichzeitig, - aufgrund Ihrer Schwerkraft und soweit erforderlich zusätzlicher nur zur Produktion von außen auf die Kugel wirkender magnetische Kräfte -, bei einem geeigneten noch erwärmten Zustand des Kunststoffs in der vorgesehenen Strömungsrichtung des Mediums im Übergang der Ampullenform in ein sich verjüngendes hohlen Endes der Ampulle eine vorzugsweise axiale Senkung in der Ampulle erzeugt, die sich in Strömungsrichtung bei geeignetem Kunststoffmaterial fluiddicht über die Kugel schließen lässt, sobald sich die gleichmäßig runde Kugel anschmiegt.

Idealer Weise wird das sich verjüngende hohle Ende der Ampulle unterhalb einer Strömungsöffnung einer Ampulle im Außenquerschnitt auf einen inneren Durchmesser eines externen Ringmagneten, der die Kugel innerhalb des Hohlkörpers an die Senke anzieht, abgestimmt und in seiner Länge derart ausgeführt, dass eine Feinjustierung des Abstandes und damit Kraftwirkung des externen Ringmagneten auf die Kugel im Hohlkörper in Abstimmung wirkender magnetischer Gegenkräfte auf die Kugel ermöglicht wird und über den folgenden Querschnitt des Ampullen-endes ein Anschluss für eine Weiterleitung des Mediums nach durchströmen der Ampulle möglich ist.

Über geeignete Längen und Querschnitte der Enden der Ampulle lassen sich bereits dauerhaft fluid- und luftdichte Anschlüsse mit geringem Widerstand und Einfluss auf die Strömung des Mediums ausführen, z.B. vorteilhafter Weise mittels übergestülpter Schläuche nach Durchfluss des Mediums durch das Ventil, bzw, vorteilhafter Weise eingeschobener Schläuche in Strömungsrichtung am Ventileingang. Andere Anschlussformen können gleichfalls realisiert werden. Bei Bedarf lassen sich auch Hohlkörper mit mehreren Anschlussmöglichkeiten, z.B. für die Zuströmung mehrerer Medien in den Hohlkörper, herstellen. Gleichfalls lässt sich der Hohlkörper auch aus mehreren Teilen oder Elementen herstellen, wobei die Luftdichtigkeit gewährleistet bleiben muss.

Eine Ventilfunktion des Hohlkörpers mit innenliegendem beweglichem Körper wird über außerhalb des Hohlkörpers angeordnete Magnete erreicht, so dass Hohlkörper, in einer Anordnung leicht ausgetauscht werden können. Das kann nützlich sein, wenn für verschiedene Medien mit unterschiedlichen Eigenschaften und Viskosität unterschiedlich ausgelegte Hohlkörper zum Einsatz kommen, bzw. im Laufe der Zeit ein fluiddichter Verschluss der Öffnung des Hohlkörpers ggf. nicht mehr erreicht wird.

Bei geringen Kosten für den Hohlkörper wird es wirtschaftlicher sein, auf eine Reinigung eines Hohlkörpers zu verzichten und gleich einen neuen Hohl-körper anzuordnen. In diesem Sinne kann der Hohlkörper ein Einwegprodukt sein, das in Bezug einer Basisanordnung von externen Magneten gewechselt werden kann.

Im Falle einer Änderung des Strömungsverhaltens eines Mediums kann über die hinterlegte Software eine Korrektur für den Austritt des Mediums über eine Dosierpore und den Übertrag des Mediums an ein Substrat erfolgen. Sofern erforderlich kann hierbei gleichzeitig innerhalb einer Automation die Lage und Ortsveränderung eines Substrats in einer Zeiteinheit berücksichtigt und auch zusätzlich koordiniert werden.

Neben den beispielhaften Zeichnungen gibt es vielfältige Varianten.

Entscheidend für die erfindungsgemäße Funktion ist ein frei beweglicher ferro-magnetischer Körper für einen veränderlichen Widerstand für ein in einem Fluidreservoir, z.B. in einem Hohlkörper, befindliches Medium. Über außerhalb des Hohlkörpers angeordnete Magnete oder ferromagnetische Materialen wirken magnetische Kräfte derart, dass ein magnetischer, bzw. ferromagnetischer Körper im Hohlkörper in Strömungsrichtung gegen eine Öffnung des Hohlkörpers angezogen wird, so dass ein Durchfluss des Mediums mediendicht blockiert ist. Je nach Distanz dieser Haltekraft und deren Einfluss auf den Körper im Hohlkörper lässt sich eine mediendichte Blockade in eine undichte Blockade derart regulierbar ändern, so dass das Medium je nach Druckzuständen über die jeweils entstandene Strömungsöffnung entweichen kann. Vorteilhaft ist es dies für eine Justierung der Kräfteverhältnisse zwischen dem im Hohlkörper befindlichen ferromagnetischen Körper und der externen Magnetkraft zu nutzen und die Lage des Körpers über eine weitere externe Magnetfeldeinwirkung auf den Körper im Hohlkörper entsprechend dem Strömungsverhalten des Mediums zu ändern. Mit Reaktion in Echtzeit ändert sich mit der Lage des Körpers die Strömungsöffnung für einen unmittelbaren und variabel einstellbaren Medienaustritt.

Entsprechend dem Umgebungsdruck an der Stelle des Medienaustritts, ent-sprechend der Oberflächenspannung des Mediums und kapillarer Kräfte, ent-sprechend dem Widerstand des Körpers im Hohlkörper und des Systems, wird sich ein Medienfluss entsprechend Druckzuständen einstellen. Bei geschlossenen Systemen genügt ein geringfügiger Überdruck, der auch Überkopfdosierungen, z.B. in Robotersystemen, ermöglicht, bei offenen Systemen eine Pore zur Außenluft zum Druckausgleich, z.B. bei autarken Dosierstiften.

Ein Zutritt von Außenluft und von Druckzuständen lässt sich z.B. wiederum über zusätzliche erfindungsgemäße Anordnungen in oder gegen die Strömungsrichtung regulieren. Gleichzeitig können hierrüber Gegenimpulse erzeugt werden, die Impulse auf ein Medium in ihrer Richtung und Wirkung ändern, die sich bei einer Lage-änderung eines frei beweglichen Körpers im Hohlkörper auf das Medium übertragen.

Impulse die sich über eine Bewegung des Körpers auf ein Medium übertragen sind gering gegenüber Systemen die auf Druckänderungen auf ein Medium basieren. Vorhandene Systeme, z.B. Druckluftsysteme, lassen sich jedoch verwenden, um bei einer erfindungsgemäßen Anordnung externer Magnete oder ferromagnetische Materialien, deren Magnetfelder eine Lageveränderung eines ferromagnetischen Körpers im Hohlkörper bewirken können, zu positionieren.

Sobald im System Medium und deutliche Druckänderungen, d.h. ein Wechsel zwischen Überdruck und Unterdruck in der medienführenden Leitungsführung, entkoppelt sind, kann ein nahezu konstant bleibender Druck auf ein Medium eingestellt werden.

Handelsüblich befinden sich unterschiedliche Medien wie Cyanacrylate, allgemein Klebstoffe, Öle, Reinigungs- Lösungsmittel, Fleckenentferner, Farben, Duft- Aromastoffe, aber auch aggressive Medien usw. in produktspezifischen Flaschen oder Behältern, bei denen für den Austritt des Mediums z.B. manuell Druck auf das Gefäß ausgeübt werden muss und gleichermaßen bei nachlassendem Druck sich das Medium, meistens mit unkontrollierten Lufteinschlüssen über die Medienaustrittsstelle, in den Behälter zurückzieht. Eine präzise und fortdauernde Dosierung eines Mediums ist damit unmöglich.

Unter Beibehaltung derartiger Gefäße ist es jedoch möglich einen Behälterver-schluss gegen Adapter mit erfindungsgemäßer Ventilfunktion auszuwechseln. Magnetfelder lassen sich für veränderliche variable Dosiervorgänge ohne Kraft-aufwand über an Adaptern oder Dosierstiften vorgesehene geführte ferromagne-tische Elemente, als auch an z.B. an einem Finger befestigte Elemente, manuell wie auch über Aktoren, ändern. Die erfindungsgemäße Vorgehensweise erfordert keinen manuellen Druck auf Gefäße. Nach Freigabe des Medienflusses erfolgt ein Medienaustritt unmittelbar und ein Medienübertrag ist auf ein Substrat, z.B. im Mikrobereich von unter 0,09 mm, je nach Medium, und gleichfalls in beliebiger Dauer möglich, solange der Systemdruck über dem Umgebungsdruck liegt.

Generell lassen sich auch Medien mit geringerer Viskosität als Wasser ohne Nachtropfen exakt dosieren. Beispielsweise lassen sich Duftstoffe Zeit- und sensorgesteuert variabel an einen Raum abgeben. Kostengünstig und einfach ist es, die variable Dosierung z.B. für Medienspender oder Getränkeautomationen zu nutzen. Hier kann z.B. das Unterstellen bzw. die Entnahme eines Gefäßes mit einhergehender Einflussnahme auf die Magnetfelder der Anordnungen einen Dosiervorgang auch ohne Strom auslösen bzw. unmittelbar ohne Nachtropfen unterbrechen, gleichfalls kann aber auch ein Medienfluss begrenzt werden. Medien strömen hierbei hygienisch einwandfrei lediglich in einer verschleißfreien medientauglichen Leitungsführung, z.B. aus Teflon, ohne jegliche Durchdringungen oder Kontakt zu mechanischen Komponenten. Leitungsführungen unterliegen keiner mechanischen Beanspruchung und lassen sich diffusionsdicht realisieren.

Insbesondere in der Medizintechnik und Life Sience ist dies für sterile und kontaminationsfreie Dosiervorgänge besonders vorteilhaft. Medienmengen lassen sich exakt dosieren. Eine Volumenzunahme eines Meniskus lässt sich unmittelbar unterbrechen oder fortsetzen. In der Mikrodosiertechnik kann über eine Zeiteinheit, auch über mehrere Tage, die Entstehung eines Tropfens, d.h. ein geringster Medienfluss, eingestellt werden.

In Systemen lassen sich ergänzend und soweit erforderlich für sensible Medien Leitungsabschnitte vorsehen, die z.B. im Fall von autarken Dosierstiften für Cyanacrylate mit Entfeuchtungsmittel gefüllt sein können. Oberflächen lassen sich passivieren. Leitungsabschnitte können derart ausgeführt sein, dass diese an ein durchströmendes Medium Stoffe abgeben, die zeitnah ein Medium bis zum Medienaustritt in seinen Eigenschaften ändern können, oder z.B. auch Aromastoffe oder Wirkstoffe einem Fluid zuführen, z.B. in der Medizintechnik, wie z.B. auch für die Gabe von Medikamenten.

Für einfache Aufgaben, z.B. um Behälter hygienisch und ohne Nachtropfen einzusetzen oder Medien umzufüllen genügt es, dass im Behälter ein ferro-magnetischer Verschlusskörper vorhanden ist und sich entsprechend einer Distanz eines externen magnetischen oder ferromagnetischen Teils, ein Medienfluss einstellt, oder dieser verhindert ist. Externe magnetische Teile können z.B. in einem Gegenstück zu einem Behälter oder in einem Deckel integriert sein.

Eine Ausführungsform sieht ein Ventil vor mit einer variablen Strömungsöffnung und einer in Strömungsrichtung über ein Medium in einem Hohlkörper mit Druck beaufschlagten frei beweglichen Kugel aus ferromagnetischem Material, die für eine Lageveränderung der Kugel, für eine Unterbrechung eines Medienflusses, von mindestens einem ersten Permanentmagneten an eine mediendichte Kontaktfläche in einem Hohlkörper in Strömungsrichtung angezogen wird und die für eine Lageänderung der Kugel, für einen Durchfluss eines Mediums durch einen Hohl-körper, von einer mediendichten Kontaktfläche im Hohlkörper, über mindestens einen ortsveränderlichen zweiten Permanentmagneten, der bei geeigneter Entfernung mit einer höheren anziehenden magnetischen Kraft auf die Kugel wirkt als der erste Magnet, beabstandet wird und je nach Entfernung und Position des zweiten Magneten und ersten Magneten zueinander ein variabler Medienfluss und eine variable Strömungsöffnung erzeugbar ist, wobei sich der erste Permanentmagnet und zweite Permanentmagnet außerhalb eines Hohlkörpers befinden.

Eine andere Ausführungsform sieht ein Ventil vor, wobei mindestens einer der Permanentmagnete in seiner Lage manuell verändert wird.

Noch eine andere Ausführungsform sieht ein Ventil vor, wobei mindestens einer der Permanentmagnete über Antriebselemente in seiner Lage verändert wird.

Weiter sieht eine Ausführungsform ein Ventil vor, wobei eine Lageveränderung und Lageregelung mindestens eines Permanentmagneten über Regelkreise in Verbindung mit definierten Steuerungsbefehlen erfolgt.

Zudem ist in einer Ausführungsform ein Ventil vorgesehen, bei dem sich dieses in einem Dosierstift befindet.

Die Dosiervorrichtung ist in einer Ausführungsform als ein Ventil ausgebildet.

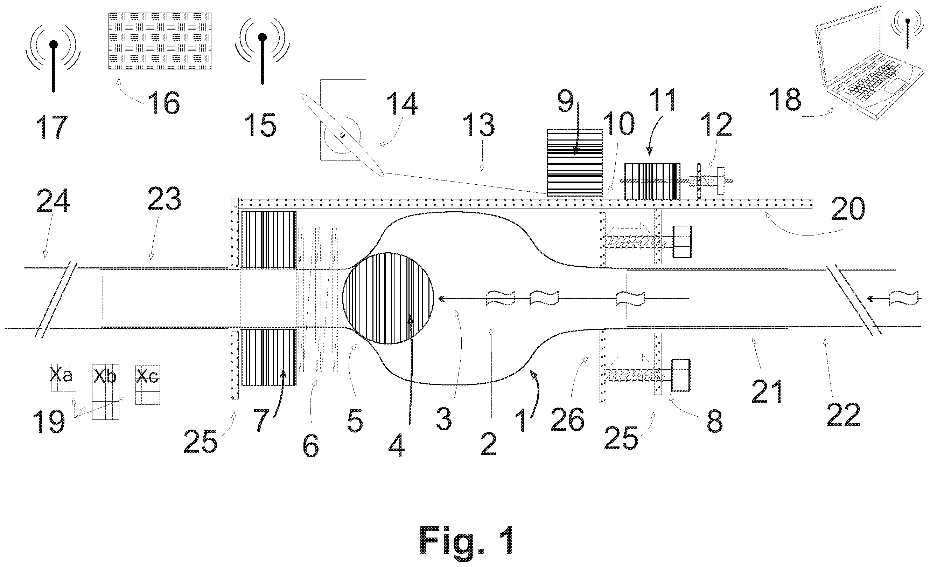

Auszugsweise werden die grundlegenden Elemente des erfindungsgemässen Ventils anhand schematischer, nicht maßstäblicher, skizzenhafter Zeichnungen für die Erläuterung eines Zusammenwirkens der einzelnen Komponenten für die Funktion des Ventils näher beschrieben, wobei
- Fig. 1: den prinzipiellen Aufbau eines Ventils im geschlossenen Zustand, mit externen Elementen und Peripheriegeräten darstellt. In einem Hohlkörper 1 wird eine frei bewegliche ferromagnetische Kugel 4 über ein Medium 2 in Strömungsrichtung 3 druckbeaufschlagt, die von einem externen Magneten 7, der über eine nicht magnetisierbare Feder 6 und Elemente 8 und einem Anschlag 26 anliegend zum Hohlkörper1 justierbar ist, gegen eine Senke 5 als mediendichte Kontaktfläche angezogen und lässt sich über einen externen Magneten 9, der bei Bedarf gegenüber einem Distanz- und Befestigungselement 20 über ein Luftkissen 10 gelagert ist, in eine variierbare Lage mit einer Verbindung 13 zu einem Motor 14, der über Controller 16 und bei Bedarf eingerichteten Funkverbindungen 15, 17, und Computer- Software 18 gesteuert werden kann, bei Bedarf mit Unterstützung von Mess- und Sensortechnik 19, in eine neue Lage bewegen.
Über eine justierbare Einstellung 12 lässt sich ein Rückstellmagnet 11 positionieren, der eine Bewegung des Magneten 9 unterstützt. Über die Übergänge 21, 23 des Hohlkörpers 1 der über Riegel oder Klipse 25 an einem Element 20 befestigt sein kann, lassen sich weiterführende Anschlüsse 22, 24 eines Dosiersystems verbinden.

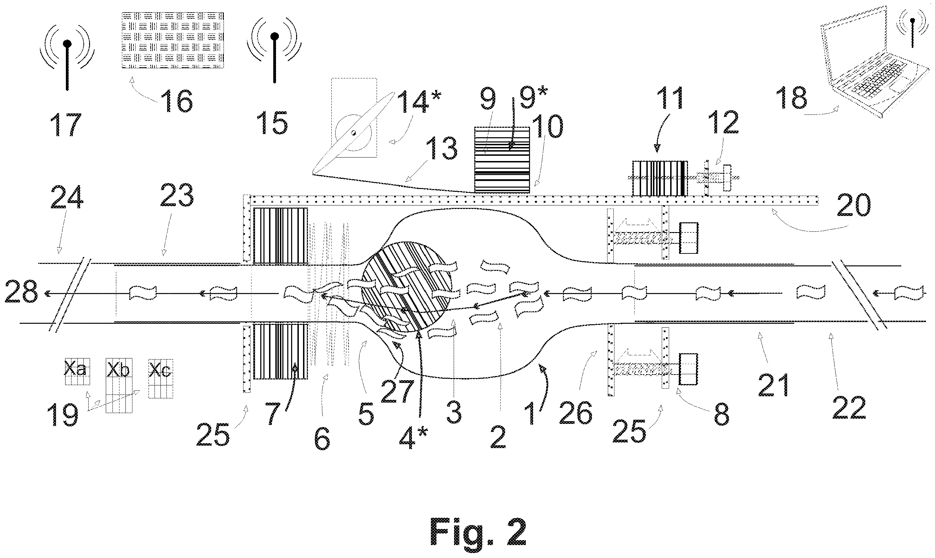

- Fig. 2: im Ventil die Kugel 4 darstellt, die von einer mediendichten Senke und Kontaktfläche 5 mit Hilfe einer neuen Motorstellung 14* und einer einhergehenden neuen Position 9* eines externen Magneten 9 mit einer magnetischen Kraftwirkung bewirkt, dass die Kugel 4 in eine neue veränderte Lage 4* ausgelenkt wird, so dass eine Strömungsöffnung 27 entsteht, über die das Medium 2 entsprechend der Strömungsrichtung 3 in Richtung einer Dosierpore 28 oder Dosiernadel (nicht dargestellt) weiterfließen kann.

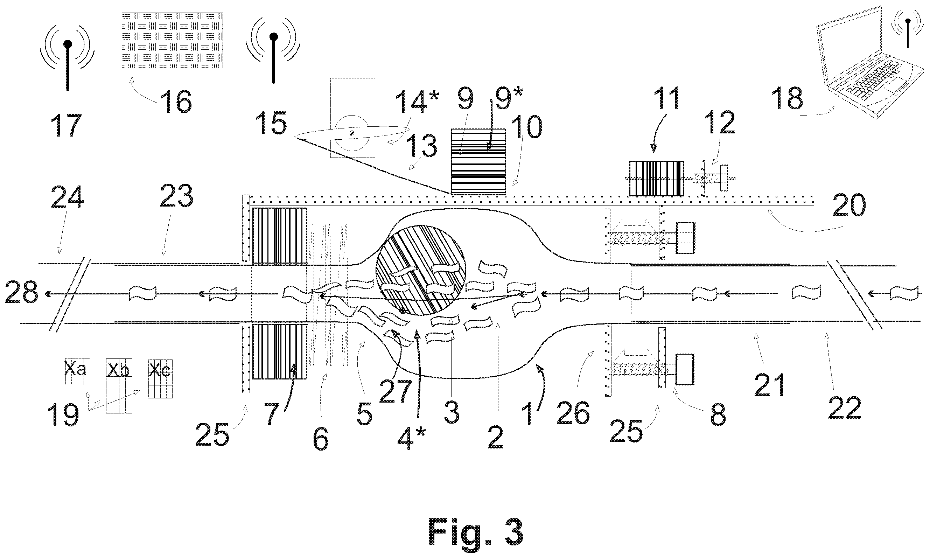

- Fig. 3: das Ventil mit einer neuen variabel kontrollierbaren, jetzt größeren Strömungsöffnung 27 in Abhängigkeit einer neuen Motorstellung 14* in Verbindung einer neuen Position 9* des externen Magneten dargestellt.

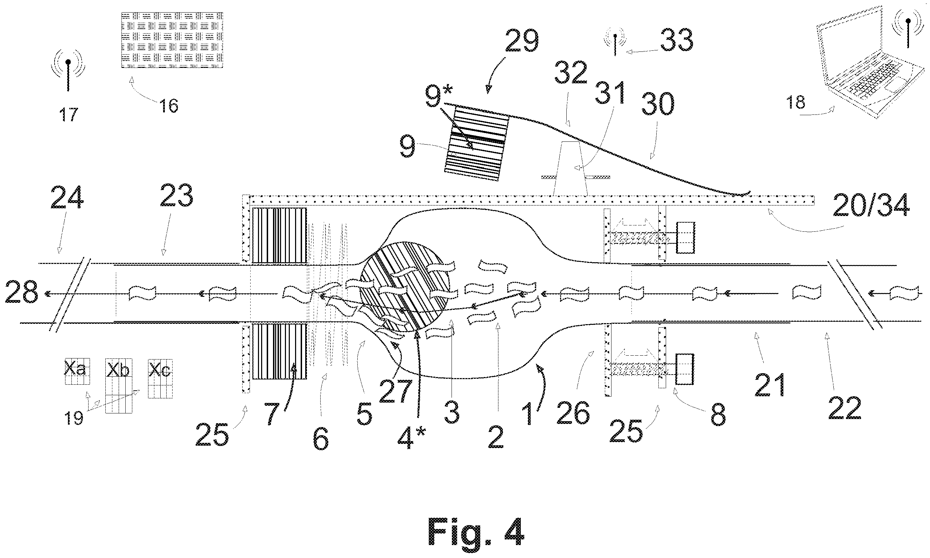

- Fig.4: das Ventil in einer Ausführung dargestellt, bei der der externe Magnet 9, z.B. manuell über eine Feder 30 und über eine Druckbewegung 29 in eine neue Position 9* gebracht wird und der Magnet 9 die Kugel in eine neue Position 4* auszulenken vermag. Für gezielte Strömungsöffnungen 27 kann ein Anschlag 31 positioniert werden, der gleichzeitig bei Kontakt zwischen der Feder 30 und dem Anschlag 31 als Schalter 32 fungieren kann, so dass sich darüber auch weitere Vorgänge, z.B. auch über eine Funkverbindung 33, aktivieren lassen.

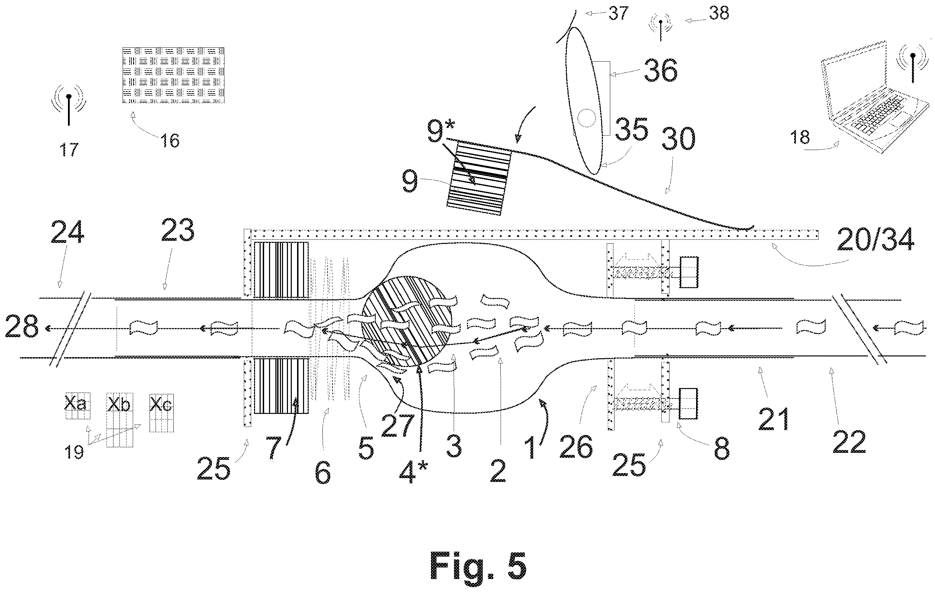

- Fig. 5: das Ventil in einer Ausführung darstellt, bei der eine variable Strömungsöffnung 27 in Verbindung mit einem beweglichen Element 35, welches an einer Anordnung 36 befestigt ist und über eine Feder 30 einen Magneten 9 in eine geänderte Position 9* bringt, der über seine magnetische Kraftwirkung eine Auslenkung der Kugel 4 bewirkt, wobei das Element 35 auch mechanisch, z.B. über Schleifer 37 innerhalb einer Automation schwenkbar ist und die Anordnung auch über Funksignale 37 angesteuert werden kann.

### Bezugsliste

1 Hohlkörper / Ampulle / Fluidreservoir
2 Medium / Fluid
3 Strömungsrichtung / Ausflussrichtung
4 Frei beweglicher Körper / Kugel / Ventilschließkörper
5 Senke - mediendichte Kontaktfläche
6 Feder, optional
7 Erster externer Magnet/ Magnet / magnetischer Aktuator
8 Feinjustierung Hohlkörper, optional
9 Zweiter externer, lageveränderlicher Magnet
10 Luftkissen, optional
11 Rückstellmagnet, optional
12 Feinjustierung Rückstellmagnet, optional
13 Verbindung positionierbarer Magnet, symbolisch
14 Bewegungselement - Motor
15 Funkverbindung Bewegungselement, Motor - Controller, optional
16 Controller, ggf. optional
17 Funkverbindung Controller - Computer, optional
18 Externer Computer, optional
19 Optionale Messtechnik - Sensoren
20 Distanzelement - Befestigungselement
21 Hohles Ampullenende - zuströmendes Medium
22 Anschluss zuströmendes Medium
23 Hohles Ampullenende - abströmendes Medium
24Anschluss für abströmendes Medium
25 Befestigung Hohlkörper / Ampulle, symbolisch
26 Anschlag Ampulle - Feinjustierung, optional
27 Variable Strömungsöffnung
28 Weiterführung Dosierpore - Dosiernadel
29 Druck für Lageänderung
30 Federelement
31 Anschlag Federelement, optional
32 Optionaler Schaltkontakt
33 Potentielle Funkverbindung
34 Distanzfläche, Dosierstift
35 Exzenterelement
36 Lagerbefestigung Exzenter, optionales Bewegungselement
37 Mechanik, optional
38 Funkverbindung, optional

## Patentansprüche

1. Verfahren zum Dosieren von Fluiden, insbesondere von flüssigen Fluiden, bei dem aus mindestens einem Fluidreservoir (1) mindestens ein Fluid (2) in eine Ausflussrichtung (3) durch eine verschließbare Ventileinrichtung geleitet wird, wobei mindestens eine Ventilöffnung der Ventileinrichtung mittels eines Ventilschließkörpers (4) verschlossen bzw. geöffnet wird, um das Fluid durch die Ventilöffnung zu leiten bzw. ein Leiten zu blockieren, wobei das Öffnen bzw. Schließen magnetisch durch Bewegen des Ventilschließkörpers (4) durchgeführt wird und der Ventilschließkörper (4) in dem Fluidreservoir (1) auf einer stromaufwärts gelegenen Seite der Ventilöffnung angeordnet und bewegt wird, wobei der Ventilschließkörper (4) ein frei beweglicher Körper aus ferromagnetischem Material ist, wobei für eine stufenlose und variable Strömungsöffnung für einen variablen Durchfluss vom Fluid der Ventilschließkörper (4) in dem Fluidreservoir(1) über außerhalb des Fluidreservoirs (1) variierbare und beabstandete Magnete gegen eine Strömungsrichtung ausgelenkt wird, wobei das Fluidreservoir (1) ein Hohlkörper ist, wobei der in Strömungsrichtung über das Fluid in dem Hohlkörper mit Druck beaufschlagte frei bewegliche Ventilschließkörper (4) für seine Lageveränderung, für eine Unterbrechung des Fluidflusses, von mindestens einem ersten Permanentmagneten (7) an eine fluiddichte Kontaktfläche im Hohlkörper in Strömungsrichtung angezogen wird, wobei der Ventilschließkörper (4) für sein Lageänderung, für einen Durchfluss des Fluids durch den Hohlkörper, von einer fluiddichten Kontaktfläche im Hohlkörper, über mindestens einen ortsveränderlichen zweiten Permanentmagneten (9), der bei geeigneter Entfernung mit einer höhreren anziehenden magnetischen Kraft auf den Ventilschließkörper (4) wirkt als der erste Magnet (7), beabstandet wird, und wobei je nach Entfernung und Position des zweiten Magneten (9) und ersten Magneten (7) zueinander ein variabler Fluidfluss und eine variable Strömungsöffnung erzeugbar ist, wobei sich der erste Permanentmagnet (7) und zweite Permanentmagnet (9) außerhalb des Hohlkörpers befinden.

2. Verfahren nach Anspruch 1, **dadurch gekennzeichnet, dass** als Fluid ein Cyanacrylat verwendet wird.

3. Dosiervorrichtung zum Dosieren von Fluiden, insbesondere von flüssigen Fluiden, mit Mitteln zur Durchführung des Verfahrens nach einem der vorherigen Ansprüche 1 oder 2, mit einem Fluidreservoir(1), das zur Aufnahme der Fluide ausgebildet ist, welches mindestens eine verschließbare Ventileinrichtung in einer Ausflussrichtung (3) aufweist, durch welche das Fluid leitbar ist, wobei die Ventileinrichtung mindestens eine Ventilöffnung aufweist, die mittels mindestens eines Ventilschließkörpers (4) verschließbar bzw. öffenbar ist, um das Fluid durch die Ventilöffnung zu leiten bzw. ein Leiten zu blockieren, wobei weiter mindestens ein magnetischer Aktuator (7, 9) vorgesehen ist, um das Öffnen bzw. Schließen durch Bewegen des Ventilschließkörpers (4) durchzuführen und der mindestens eine Ventilschließkörper (4) auf einer stromaufwärts gelegenen Seite der Ventilöffnung in dem Fluidreservoir (1) angeordnet und bewegbar ist, wobei der Ventilschließkörper(4) ein frei beweglicher Körper aus ferromagnetischem Material ist, wobei für eine stufenlose und variable Strömungsöffnung für einen variablen Durchfluss vom Fluid der Ventilschließkörper (4) in dem Fluidreservoir (1) über außerhalb des Fluidreservoirs (1) variierbare und beabstandete Magnete gegen eine Strömungsrichtung ausgelenkt wird, wobei das Fluidreservoir (1) ein Hohlkörper ist, wobei der in Strömungsrichtung über das Fluid in dem Hohlkörper mit Druck beaufschlagte frei bewegliche Ventilschließkörper (4) für seine Lageveränderung, für eine Unterbrechung des Fluidflusses, von mindestens einem ersten Permanentmagneten (7) an eine fluiddichte Kontaktfläche im Hohlkörper in Strömungsrichtung angezogen wird, wobei der Ventilschließkörper (4) für seine Lageänderung, für einen Durchfluss des Fluids durch den Hohlkörper, von einer fluiddichten Kontaktfläche im Hohlkörper, über mindestens einen ortsveränderlichen zweiten Permanentmagneten (9), der bei geeigneter Entfernung mit einer höheren anziehenden magnetischen Kraft auf den Ventilschließkörper (4) wirkt, als der erste Magnet (7), beabstandet wird, und wobei je nach Entfernung und Position des zweiten Magnete (9) und ersten Magneten (7) zueinander ein variabler Fluidfluss und eine variable Strömungsöffnung erzeugbar ist, wobei sich der erste Permanentmagnet (7) und zweite Permanentmagnet (9) außerhalb des Hohlkörpers befinden.

4. Dosiervorrichtung nach Anspruch 3, **dadurch gekennzeichnet, dass** als Fluid ein Cyanacrylat vorgesehen ist.

5. Verwendung einer Dosiervorrichtung nach einem der vorherigen Ansprüche 3 oder 4 zum Dosieren von Fluiden, insbesondere von gasförmigen und/oder flüssigen Fluiden, insbesondere für ein tropffreies Dosieren.

## Claims

1. Method for metering fluids, in particular liquid fluids, in which at least one fluid (2) is conducted out of at least one fluid reservoir (1) through a closable valve device in a discharge direction (3), wherein at least one valve opening of the valve device is closed or opened by means of a valve closing body (4) to conduct the fluid through the valve opening or to block conduction, wherein the opening or closing is performed magnetically by moving the valve closing body (4), and the valve closing body (4) is arranged and moved in the fluid reservoir (1) on an upstream side of the valve opening, wherein the valve closing body (4) is a freely moveable body of ferromagnetic material, wherein for an infinitely and variable flow opening for variable flow of the fluid, the valve closing body (4) is deflected against a direction of flow in the fluid reservoir (1) via magnets spaced apart and variable outside the fluid reservoir (1), wherein the fluid reservoir (1) is a hollow body, wherein to effect a change in its position to interrupt the flow of the fluid, the freely moveable valve closing body (4) pressurised via the fluid in the hollow body in the direction of flow is attracted towards a fluid-tight contact surface in the hollow body in the direction of flow by at least one first permanent magnet (7), wherein to effect a change in its position to allow the fluid to flow through the hollow body, the valve closing body (4) is pulled away from a fluid-tight contact surface in the hollow body by at least one moveable second permanent magnet (9), which, at a suitable distance, acts on the valve closing body (4) with a greater magnetic attraction force than the first magnet (7), and wherein depending on the distance between and position of the second magnet (9) and the first magnet (7) with regard to one another, a variable fluid flow and variable flow opening can be generated, wherein the first permanent magnet (7) and the second permanent magnet (9) are located outside the hollow body.

2. Method according to claim 1, **characterised in that** cyanoacrylate is used as the fluid.

3. Metering device for metering fluids, in particular liquid fluids, with means for carrying out the method according to one of the above claims 1 or 2, with a fluid reservoir (1) which is adapted to receive the fluids and has at least one closable valve device in a discharge direction (3) through which the fluid can be conducted, wherein the valve device has at least one valve opening which can be closed or opened by means of at least one valve closing body (4) to conduct the fluid through the valve opening or to block conduction, wherein in addition at least one magnetic actuator (7, 9) is provided to perform the opening and closing actions by moving the valve closing body (4) and the at least one valve closing body (4) is arranged on an upstream side of the valve opening in the fluid reservoir (1) and moveable, wherein the valve closing body (4) is a freely moveable body of ferromagnetic material, wherein for an infinitely variable flow opening for variable flow of the fluid, the valve closing body (4) is deflected against a direction of flow in the fluid reservoir (1) via magnets spaced apart and variable outside the fluid reservoir (1), wherein the fluid reservoir (1) is a hollow body, wherein to effect a change in its position to interrupt the flow of the fluid, the freely moveable valve closing body (4) pressurised via the fluid in the hollow body in the direction of flow is attracted towards a fluid-tight contact surface in the hollow body in the direction of flow by at least one first permanent magnet (7), wherein to effect a change in its position to allow the fluid to flow through the hollow body, the valve closing body (4) is pulled away from a fluid-tight contact surface in the hollow body by at least one moveable second permanent magnet (9), which, at a suitable distance, acts on the valve closing body (4) with a greater magnetic attraction force than the first magnet (7), and wherein depending on the distance between and position of the second magnet (9) and the first magnet (7) with regard to one another, a variable fluid flow and variable flow opening can be generated, wherein the first permanent magnet (7) and the second permanent magnet (9) are located outside the hollow body.

4. Metering device according to claim 3, **characterised in that** cyanoacrylate is used as the fluid.

5. Use of a metering device according to one of the above claims 3 or 4 for metering fluids, especially gaseous and/or liquid fluids, in particular for drip-free metering.

## Revendications

1. Procédé de dosage de fluides, en particulier de fluides liquides, dans lequel au moins un fluide (2) est dirigé à partir d'au moins un réservoir de fluide (1) dans une direction d'écoulement (3) à travers un dispositif de soupape pouvant être fermé, au moins une ouverture de soupape du dispositif de soupape étant fermée ou ouverte au moyen d'un corps de fermeture de soupape (4) afin de diriger le fluide à travers l'ouverture de soupape ou de bloquer l'écoulement, l'ouverture ou la fermeture étant effectuée de manière magnétique par déplacement du corps de fermeture de soupape (4) et le corps de fermeture de soupape (4) est disposé et déplacé dans le réservoir de fluide (1) sur un côté amont de l'ouverture de soupape, le corps de fermeture de soupape (4) étant un corps librement mobile en matériau ferromagnétique, dans lequel, pour une ouverture d'écoulement variable et continue en vue d'un écoulement variable du fluide, le corps de fermeture de soupape (4) est dévié dans le réservoir de fluide (1) par des aimants variables et espacés à l'extérieur du réservoir de fluide (1) contre une direction d'écoulement, dans lequel le réservoir de fluide (1) est un corps creux, dans lequel le corps de fermeture de soupape (4) librement mobile, mis sous pression dans la direction d'écoulement par le fluide dans le corps creux, est dévié pour son changement de position, pour une interruption de l'écoulement de fluide, est attiré dans le sens d'écoulement par au moins un premier aimant permanent (7) sur une surface de contact étanche au fluide dans le corps creux, le corps de fermeture de soupape (4) étant attiré pour son changement de position, pour un passage du fluide à travers le corps creux, par une surface de contact étanche au fluide dans le corps creux, par l'intermédiaire d'au moins un deuxième aimant permanent (9) mobile, qui, à une distance appropriée, agit sur le corps de fermeture de soupape (4) avec une force magnétique d'attraction supérieure à celle du premier aimant (7), et un flux de fluide variable et une ouverture d'écoulement variable pouvant être générés selon la distance et la position du deuxième aimant (9) et du premier aimant (7) l'un par rapport à l'autre, le premier aimant permanent (7) et le deuxième aimant permanent (9) se trouvant à l'extérieur du corps creux.

2. Procédé selon la revendication 1, **caractérisé en ce que** l'on utilise comme fluide un cyanoacrylate.

3. Dispositif de dosage pour le dosage de fluides, en particulier de fluides liquides, avec des moyens pour la mise en oeuvre du procédé selon l'une des revendications précédentes 1 ou 2, avec un réservoir de fluide (1) qui est conçu pour recevoir les fluides, qui présente au moins un dispositif de soupape pouvant être fermé dans une direction d'écoulement (3), à travers lequel le fluide peut être conduit, le dispositif de soupape présentant au moins une ouverture de soupape qui peut être fermée ou ouverte au moyen d'au moins un corps de fermeture de soupape (4) pour diriger le fluide à travers l'ouverture de la soupape ou pour bloquer l'écoulement, au moins un actionneur magnétique (7, 9) étant en outre prévu pour effectuer l'ouverture ou la fermeture en déplaçant le corps de fermeture de soupape (4) et ledit au moins un corps de fermeture de soupape (4) est disposé et mobile sur un côté amont de l'ouverture de soupape dans le réservoir de fluide (1), le corps de fermeture de soupape (4) étant un corps librement mobile en matériau ferromagnétique, dans lequel, pour une ouverture d'écoulement variable et continue en vue d'un écoulement variable du fluide, le corps de fermeture de soupape (4) est dévié dans le réservoir de fluide (1) par des aimants variables et espacés à l'extérieur du réservoir de fluide (1) contre une direction d'écoulement, dans lequel le réservoir de fluide (1) est un corps creux, dans lequel le corps de fermeture de soupape (4) librement mobile, mis sous pression dans la direction d'écoulement par le fluide dans le corps creux, est dévié pour son changement de position, pour une interruption de l'écoulement de fluide, est attiré dans le sens d'écoulement par au moins un premier aimant permanent (7) sur une surface de contact étanche au fluide dans le corps creux, le corps de fermeture de soupape (4) étant attiré pour son changement de position, pour un passage du fluide à travers le corps creux, par une surface de contact étanche au fluide dans le corps creux, par l'intermédiaire d'au moins un deuxième aimant permanent (9) mobile, qui, à une distance appropriée, agit sur le corps de fermeture de soupape (4) avec une force magnétique d'attraction supérieure à celle du premier aimant (7), et un flux de fluide variable et une ouverture d'écoulement variable pouvant être générés selon la distance et la position du deuxième aimant (9) et du premier aimant (7) l'un par rapport à l'autre, le premier aimant permanent (7) et le deuxième aimant permanent (9) se trouvant à l'extérieur du corps creux.

4. Dispositif de dosage selon la revendication 3, **caractérisé en ce que** l'on utilise comme fluide un cyanoacrylate.

5. Utilisation d'un dispositif de dosage selon l'une des revendications précédentes 3 ou 4 pour le dosage de fluides, notamment de fluides gazeux et/ou liquides, en particulier pour un dosage sans goutte.
